# EUROPEAN PATENT APPLICATION

(11) **EP 3 760 500 A1**
(43) Date of publication of application: **06.01.2021**
(21) Application number: 18907910.6
(22) Date of filing: 13.06.2018
(51) Int. Cl.: B60S 5/06

(54) **BATTERY COMPARTMENT, NEW ENERGY AUTOMOBILE BATTERY SWAP STATION AND BATTERY STORAGE AND TRANSFER METHOD**

(30) Priority: 28.02.2018 CN 201810168399
(71) Applicant: NIO (ANHUI) HOLDING CO., LTD, Economic and Technological Development Zone Hefei Anhui 230601 (CN)
(72) Inventor: HAO, Zhanduo, Shanghai (CN); QI, Wengang, Shanghai (CN); YANG, Chao, Shanghai (CN); CHEN, Jiong, Shanghai (CN)
(74) Representative: Vossius & Partner Patentanwälte Rechtsanwälte mbB
(86) International application number: PCT/CN2018/091086
(87) International publication number: WO 2019/165722

(57) **Abstract**

Disclosed are a battery storage, a battery swap station for a new energy vehicle, and a battery storage and transfer method. The battery storage comprises: a battery rack (10), a plurality of storage locations (11) for storing batteries being provided in the battery rack (10); and an elevator (20), the elevator (20) being arranged adjacent to the battery rack (10), and the elevator (20) having a lifting platform capable of ascending/descending to a height of each of the storage locations (11), wherein a battery transfer device is provided on the lifting platform, and the battery transfer device is adapted to dock and transfer a battery between the battery rack (10) and a docking mechanism. The battery swap station has advantages of being compact and occupying a small area, and improves overall battery swap time by improving the efficiency of the battery storage transferring the battery.

## Description

### Technical Field

The invention relates to the technical field of battery management. Specifically, the invention relates to a battery storage, and further relates to a battery swap station for a new energy vehicle, and a battery storage and transfer method.

### Background Art

Battery swapping is a fast energy replenishment method for new energy vehicles. Specifically, it refers to an energy replenishment method in which a traction battery of a new energy vehicle is removed by a battery swap device, and is immediately swapped for another traction battery.

A battery swap station for a new energy vehicle is a place for the new energy vehicle to perform battery swapping. The traction battery management, such as storage, is a basic function of the battery swap station. In an existing battery swap station, a general battery storage has such a basic function, but a special tool cart is required to transport a removed battery away and bring in a fresh battery in order to prepare for battery swapping of the new energy vehicle.

### Summary of the Invention

An object of one aspect of the invention is to provide an improved battery storage.

An object of another aspect of the invention is to provide an improved battery swap station for a new energy vehicle, in which the aforementioned battery storage is installed.

An object of yet another aspect of the invention is to provide an improved battery storage and transfer method.

In order to achieve the foregoing objects, a first aspect of the invention provides a battery storage, wherein the battery storage comprises:
a battery rack, a plurality of storage locations for storing batteries being provided in the battery rack; and
an elevator, the elevator being arranged adjacent to the battery rack, and the elevator having a lifting platform capable of ascending/descending to a height of each of the storage locations, wherein a battery transfer device is provided on the lifting platform, and the battery transfer device is adapted to dock and transfer a battery between the battery rack and a docking mechanism.

Optionally, in the battery storage as described above, the storage locations are located at different heights of the battery rack in a stacked manner.

Optionally, in the battery storage as described above, the battery rack uses a modular design to constitute a battery rack module, the elevator uses a modular design to constitute an elevator module, and the battery rack module is adjacent to the elevator module.

Optionally, in the battery storage as described above, the battery transfer device comprises a battery lateral moving device and a battery transverse moving device.

Optionally, in the battery storage as described above, a battery charging device is provided at each of the storage locations.

Optionally, in the battery storage as described above, a smart pluggable mechanism is provided at each of the storage locations for automatically connecting and disconnecting the battery with/from the battery charging device.

Optionally, in the battery storage as described above, the smart pluggable mechanism is controlled by a servo motor or a cylinder.

Optionally, in the battery storage as described above, a battery limiting device for fixing the battery is provided at each of the storage locations.

Optionally, in the battery storage as described above, a battery conveying device is provided at each of the storage locations for docking and transferring the battery between the lifting platform and the storage location.

Optionally, in the battery storage as described above, the battery conveying device is a conveyor belt.

Optionally, in the battery storage as described above, a battery cooling device is provided at each of the battery racks.

Optionally, in the battery storage as described above, the battery racks are located on both sides of the elevator.

In order to achieve the foregoing objects, a second aspect of the invention provides a battery swap station for a new energy vehicle, wherein the battery swap station for a new energy vehicle is provided with the battery storage as described in any one of the foregoing first aspect.

Optionally, in the battery swap station for a new energy vehicle as described above, the battery storage has a plurality of battery racks arranged in series.

Optionally, in the battery swap station for a new energy vehicle as described above, in the battery storage, each of the battery racks is correspondingly provided with one elevator, or all the battery racks share one elevator.

In order to achieve the foregoing objects, a third aspect of the invention provides a battery storage and transfer method using the battery storage according to any one of the foregoing first aspect, wherein the method comprises the following steps:
step A: the lifting platform docks a first battery from the docking mechanism, and then it proceeds to step B;
step B: the battery transfer device adjusts the position of the first battery on the lifting platform, and then it proceeds to step C or performs step C at the same time;
step C: the lifting platform raises or lowers the first battery to the height of the storage location for storing, and then it proceeds to step D;
step D: the lifting platform and the battery rack transfer the first battery to the storage location for storing, and then it proceeds to step E;
step E: the lifting platform is raised or lowered to the height of the storage location for storing a second battery, and then it proceeds to step F;
step F: the lifting platform docks the second battery from the battery rack, and then it proceeds to step G;
step G: the lifting platform raises or lowers the second battery to the height of the docking mechanism, and then it proceeds to step H; and
step H: the battery transfer device moves the second battery to the docking mechanism.

Optionally, in the method as described above, the method further comprises:
step I: the battery conveying device at the storage location for storing transports the first battery into the storage location for storing and positions it, and then the first battery is charged;
and the start of the step I is later than the end of the step D.

Optionally, in the method as described above, the method further comprises:
step J: the charging of the second battery is stopped at the storage location where the second battery is stored and the connection with the second battery is disconnected;
wherein the end of the step J is earlier than the start of the step F.

In order to achieve the foregoing objects, a fourth aspect of the invention provides a battery storage and transfer method using the battery storage according to any one of the foregoing first aspect, wherein the method comprises the following steps:
step A': the lifting platform docks a first battery from the docking mechanism, and then, when the height of the docking mechanism is different from the height of a first storage location for storing the first battery on the battery rack, it proceeds to step B', and when the height of the docking mechanism is the same as the height of the first storage location, it proceeds to step C';
step B': the lifting platform raises/lowers the first battery to the first storage location, and then it proceeds to C';
step C': the lifting platform and the battery rack transfer the first battery to the first storage location, and then it proceeds to step D';
step D': the lifting platform docks a second battery at a second storage location with the same height as the first storage location from the battery rack, then, when the height of the second storage location is different from the height of the docking mechanism, it proceeds to step E', and when the height of the second storage location is the same as the height of the docking mechanism, it proceeds to step F';
step E': the lifting platform raises/lowers the second battery to a height suitable for docking with the docking mechanism; and
step F': the battery transfer device transfers the second battery to the docking mechanism,
and the method further comprises:
step G': the first storage location is vacated in the battery rack;
step H': the battery rack transfers the second battery to the second storage location;
wherein the end of the step G' is earlier than the start of the step C', and the end of the step H' is earlier than the start of the step D'.

Optionally, in the method as described above, the method further comprises:
step I': the charging of the second battery is stopped at the second storage location and the connection with the second battery is disconnected;
wherein the end of the step I' is earlier than the start of the step D' and the start of the step I' is later than the end of the step H'.

Optionally, in the method as described above, the method further comprises:
step J': the battery rack transports the first battery into the first storage location and positions it, and then the first battery is connected at the first storage location and the first battery is charged,
wherein the start of the step J' is later than the end of the step C'.

Optionally, in the method as described above, the step C' and the step D' are completed in one continuous action.

### Brief Description of the Drawings

The disclosure of the invention will be more apparent with reference to the accompanying drawings. It should be appreciated that these accompanying drawings are merely used for the purpose of description, and are not intended to limit the scope of protection of the invention. In the figures:
Fig. 1 is a schematic perspective view of a battery storage according to an embodiment of the invention;
Fig. 2 is a schematic flowchart of a turnover process of fresh and used batteries by the battery storage according to an embodiment of the invention;
Figs. 3 and 4 are schematic block diagrams of simplified beats of the turnover process of the fresh and used batteries by the battery storage according to an embodiment of the invention;
Fig. 5 is a schematic flowchart of simplified beats of a turnover process of batteries according to an embodiment of the invention;
Figs. 6 and 7 are a schematic block diagram of an expanded distribution of elevators and battery racks in a battery storage according to an embodiment of the invention, or a schematic block diagram of an expanded distribution of battery storages in a battery swap station for a new energy vehicle according to an embodiment of the invention;
Figs. 8 and 9 schematically show different expansion manners of an elevator and battery racks in a battery storage according to an embodiment of the invention, respectively; and
Fig. 10 shows an overall schematic view of a battery swap station according to an embodiment of the invention.

### Detailed Description of Embodiments

Specific embodiments of the invention are described below in detail with reference to the accompanying drawings. In the accompanying drawings, the same reference numerals denote the same or corresponding technical features.

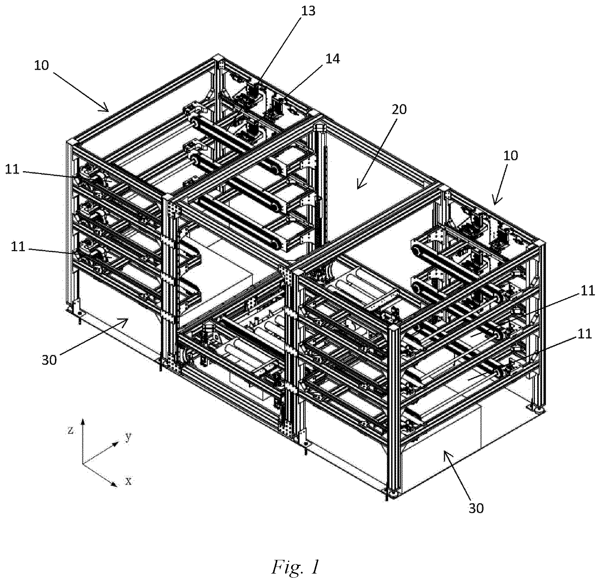

Fig. 1 is a schematic perspective view of a battery storage according to an embodiment of the invention.

As shown in the figure, the battery storage of this embodiment comprises a battery rack 10 and an elevator 20 arranged adjacent to the battery rack 10. Considering the transportability of the device, the battery rack 10 and the elevator 20 may be manufactured in a modular manner to form a corresponding battery rack module and an elevator module, and the battery rack module and the elevator module are adjacent to each other such that they can be assembled conveniently, which is suitable for flexible allocation of resources, and can be assembled into a battery storage in the form of a distributed layout on site as required.

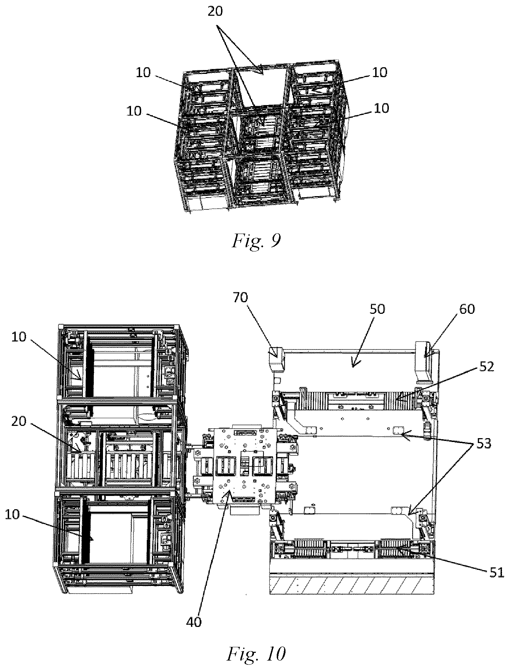

In an optional embodiment, the elevator 20 can dock and transfer a battery between a docking mechanism (for example, a RGV for disassembling and assembling a battery for a new energy vehicle, see Fig. 10) and the battery rack 10. For example, the elevator 20 may have a lifting platform that can transfer (raise/lower) the battery in a vertical direction, that is, a Z direction as shown in the figure, and can ascend/descend to a height of each storage location; and a battery transfer device on the lifting platform can switch and transfer the battery with the aforementioned docking mechanism or battery rack 10, and realize ascending/descending and transverse moving transport of the battery, such that the battery moves to and aligns horizontally with a battery conveying device 13 at each layer of storage locations of the battery storage. The battery transfer device may comprise a battery lateral moving device and a battery transverse moving device, so as to realize lateral displacement of the battery carried in a horizontal direction along a front-rear direction, that is, a Y direction (i.e., a lateral direction) as shown, and along a left-right direction, that is, an X direction (i.e., a transverse direction) as shown, respectively.

It can be understood that, in a specific embodiment, when performing a battery swap for a new energy vehicle, the battery transfer device of the elevator 20 can transfer the battery between the new energy vehicle and the battery rack 10 along the Y direction, and can transfer the battery to the battery rack 10 along the X direction or dock the battery from the battery rack 10; and the lifting platform itself can raise/lower the battery along the Z direction such that the battery is horizontally aligned with the battery rack or the new energy vehicle.

Fig. 1 shows the battery rack 10 in the form of a frame, which is used to realize horizontal transverse movement and storage and charging of the battery. In some embodiments, these frames may be made of an aluminum alloy or channel steel structure, etc. It can be understood that, in an optional embodiment, the battery rack may also take any other feasible form, such as but not limited to a shelf, a storage cabinet, and the like.

As can be seen from the figure, in order to achieve compact battery storage, each battery rack 10 may be provided with a plurality of storage locations 11 for storing batteries (not shown), and more storage locations can be expanded to stack. In an optional embodiment, these storage locations may be located at different heights of the battery rack in a stacked manner. Here, the storage location refers to a unit for storing one battery on the battery rack. In the illustrated embodiment, each battery rack 10 provides a total of three layered and stacked storage locations 11, and two battery racks 10 are respectively arranged on both sides of the elevator 20. In an optional embodiment, the battery rack may also be configured on one side of the elevator.

It can be understood that, due to shortage of urban land, an occupied area will directly affect the construction and operating cost of a battery swap station. Therefore, this compact design has characteristics of a small occupied area and a low cost while having complete functions and a reliable device.

In an optional embodiment, those skilled in the art may set the number of storage locations according to specific conditions, and may perform corresponding expansion to increase an overall battery swap capacity and an overall electrical energy storage capacity of the battery swap station. For example, as a space height (Z direction) allows, more layers of storage locations can be expanded according to specific conditions; and as a transverse space (X direction and Y direction) allows, it can be expanded in a horizontal plane. It can be understood that when these expansions are performed, parameters such as the height of the battery rack and the travel of the elevator must also be considered. It can be seen that, in addition to being compact, the battery storage according to the optional embodiment of the invention also has the advantage of being expandable, so that device resources can be maximized, and the specification of the battery swap station can be flexibly configured to accommodate different sizes of land and different rated electric capacities.

According to the illustration, the battery rack 10 in this embodiment may also be provided with the elevator 20 mentioned above. In this embodiment, the battery rack 10 and its respective storage locations 11 are respectively arranged on both sides of the elevator 20, and the storage locations on each side are layered and stacked vertically. Specifically, in the illustrated example, the battery racks on both sides of the elevator 20 are respectively provided with three battery storage locations 11 layered and stacked vertically, and correspondingly layered storage locations on both sides are at the same height level. According to the foregoing teachings of the invention, in an optional embodiment, a battery rack may also be provided only on one side of the elevator 20, and the battery storage locations therein may also be layered and stacked. For example, in order to make the description more intuitive, the battery rack on one side of the elevator 20 in Fig. 1 may be omitted, and only the battery rack on the other side of the elevator is retained. In a variation of this embodiment, the number of storage locations and the like may also be changed, and they may also be expanded in the X direction, Y direction, Z direction, and the like.

A battery conveying device 13 may be provided at each storage location 11 of the battery rack 10 for docking and transferring the battery between the battery transfer device on the lifting platform of the elevator 20 and the storage location 11. Specifically, after the battery transfer device rotates the battery to a corresponding layer of the battery rack 10, the battery conveying device 13 at the corresponding position may dock the battery and transfer same to the storage location 11. Conversely, the battery conveying device may also transfer the battery at the storage location 11 to an appropriate position of the corresponding layer of the battery rack 10 and transfer the battery to the lifting platform of the elevator. In the illustrated example, the battery conveying device 13 is exemplified as a conveyor belt, which may be driven by, for example, an electric motor. In order to realize battery conveying, it can be understood that various implementations have been proposed in the prior art, such as conveyor chains, rollers, gears and racks, etc., which will not be listed one by one. These prior art conveying forms may all be applied in different embodiments of the invention.

When the battery conveying device 13 conveys the battery to the storage location 11, in order to ensure accurate storage of the battery, a battery limiting device for fixing the battery may be provided at each storage location of the battery rack 10 for accurate positioning of the battery in the storage location. The battery limiting device may be, for example, but not limited to, a limit block, etc., and may be designed according to specific conditions, for example, it may comprise limit blocks in X and Y directions, etc., which can transport the battery smoothly and quickly, and realize accurate positioning and insertion/withdrawal. These limit blocks may be designed to be movable, and driven by cylinders or electric motors. In addition, a positioning hole on the battery may also be used to realize charging and positioning of the battery, which further ensures transportation, positioning and charging and insertion/withdrawal of the battery between storage locations.

In addition, it should be pointed out that, as an energy storage medium with a high energy density, if the battery lacks necessary cooling and protection measures, it may not be able to control thermal runaway in time when a failure occurs and cause threats, so the safety of the battery is also considered in the design of the battery storage of an optional embodiment of the invention. Specifically, in the illustrated embodiment, a water cooling system 30 (see Fig. 1) is provided under each battery rack for cooling multiple batteries when the batteries are charged. It can be understood that placing the water cooling system under the battery rack makes good use of space and meets the need of a compact design.

In an optional embodiment, a battery cooling device may also be provided at each battery rack and may be located above or below a battery storage and charging location so as to realize heat exchange generated during fast charging of the battery, and the safety during the storage of the battery may also be improved. Optionally, the battery cooling device may be a water cooling device. In an optional embodiment, other methods such as air cooling may also be used; and a cooling medium other than water may also be used for liquid cooling. The existing various cooling methods are not exhaustive here, but these cooling methods may also be used in an optional embodiment of the invention.

In order to make full use of storage time of the battery, it is advantageous to charge the battery when the battery is stored in each storage location. Therefore, in an optional embodiment, a battery charging device 14 may be provided at each storage location of the battery rack or at an appropriate storage location, so as to charge the batteries stored in the storage location without interruption and in time. Here, in order to liberate manual charging and insertion/withdrawal operations performed by the staff, a smart pluggable mechanism may be provided at each storage location on the battery rack 10 for automatically connecting and disconnecting the battery with/from the battery charging device 14. For example, in the specific embodiment, it may be realized by automatically connecting and disconnecting a battery connection plug with/from, for example, a socket in the storage location. The smart pluggable mechanism may be controlled or driven by means of servo motors or cylinders, etc.

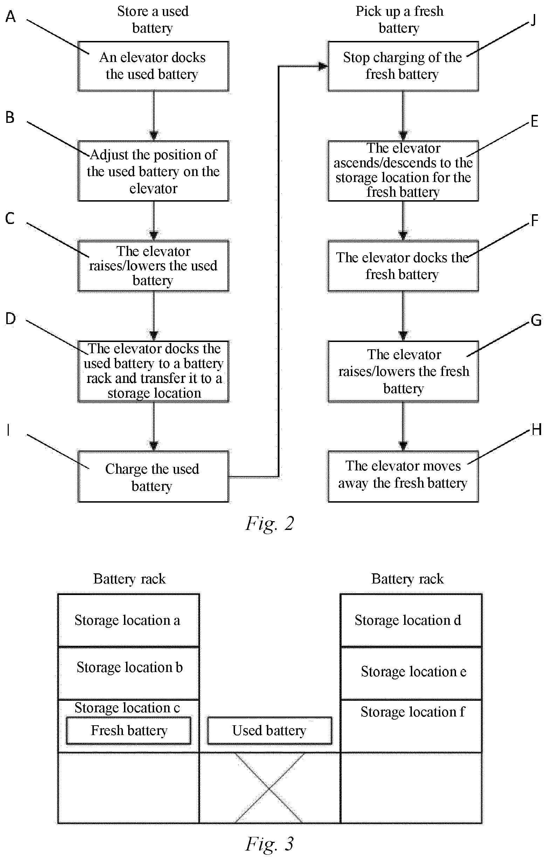

Fig. 2 is a schematic flowchart of a turnover process of fresh and used batteries by the battery storage according to an embodiment of the invention. In an optional embodiment, the sequence of step J and step E in Fig. 2 may be interchanged, but step F in Fig. 2 must be performed after step J and step E are completed. Step I in Fig. 2 may be executed at any time after step D is completed.

In combination with the above, an aspect of this application provides a battery storage and transfer method using the battery storage of any embodiment of the invention. The method may comprise the following steps A-H, and may also comprise step I and/or step J, which will be further described below.

In step A, the lifting platform of the elevator docks a first battery, such as a used battery (that is, a battery that has exhausted its power, which will be described later using the used battery as an example) from the docking mechanism, and then it proceeds to step B. It can be understood that the used battery of a new energy vehicle may be removed by an independent disassembly tool (for example, the disassembly tool may be arranged on the RGV), and then the RGV will move the used battery to a docked position with the battery storage, at the same time, the lifting platform of the elevator ascends/descends to its docked position, and then the battery is moved laterally and docked to the battery transfer device of the lifting platform. It can be understood that the docking mechanism here may also be other types of docking facilities other than RGV.

In step B, the battery transfer device adjusts the position of the used battery on the lifting platform, and then it proceeds to step C. As for the elevator 20 in Fig. 1, after the lifting platform is docked to the used battery, the battery transfer device will adjust the position of the used battery along the Y direction, that is, in the horizontal direction along the front-rear direction, and/or along the X direction, that is, in the horizontal direction along the left-right direction, and the positioning of the battery on the lifting platform is realized by a positioning cylinder.

In step C, the lifting platform raises/lowers the used battery to the height of the storage location for storing, and then it proceeds to step D. After the positioning of the used battery on the lifting platform is completed, if the lifting platform is not aligned with the height of the storage location for storing the battery, the lifting platform will raise/lower the used battery until it reaches the height of the storage location for storing in order to facilitate next docking the used battery from the lifting platform to the battery rack. The ascending/descending of the elevator may be achieved by a rigid chain (not shown).

In step D, the lifting platform and the battery rack transfer the used battery to the storage location for storing, and then it proceeds to step E. At this time, the lifting platform moves the used battery transversely, and simultaneously transfers the used battery from the lifting platform to the battery rack along the X direction along with a transverse moving mechanism in the storage location for storing. In this step, the battery may not have reached the storage location for storing the battery. The step of conveying the battery into the storage location and positioning, and the step of inserting a connector into the battery by an electrical and water pluggable mechanism in the storage location to realize battery charging and battery cooling may be performed simultaneously with the following steps related to the elevator.

In step E, the lifting platform is raised or lowered to the height of the storage location for storing a second battery, and then it proceeds to step F. The second battery is, for example, a fresh battery, that is, a fully charged battery. The fresh battery is used as an example to describe. At this time, if the height of the lifting platform is different from that of the storage location for storing the fresh battery, the lifting platform ascends/descends to reach the corresponding height so as to be aligned with the height of the storage location for storing the fresh battery to facilitate docking of the fresh battery. It can be understood that during this step, the fresh battery may have been transferred to the location to be docked in advance.

In step F, the lifting platform docks a fresh battery from the battery rack and may position it, and then it proceeds to step G. In this step, the battery may be conveyed to the lifting platform along the X direction in the figure.

In step G, the lifting platform raises or lowers the fresh battery to the height of the docking mechanism, and then it proceeds to step H. The height of the docking mechanism here is the height at which the fresh battery is adapted to be docked and transferred between the lifting platform and the docking mechanism.

In step H, the battery transfer device on the lifting platform moves the fresh battery to the aforementioned docking mechanism. Then, the docking mechanism, such as an RGV, may transfer the fresh battery to another appropriate location for processing, for example, transfer the fresh battery to a battery swap platform and install the fresh battery on the new energy vehicle to complete a battery swap operation for the new energy vehicle.

The above steps A-H may be performed sequentially.

In an optional embodiment, the method may further comprise step I, wherein the battery conveying device at the storage location for storing transports the used battery into the storage location for storing and positions it, and then the used battery may be charged. It can be understood that the start of step I needs to be later than the end of step D, that is, only when the used battery is transferred to the battery rack, it may be transported to the storage location for positioning and charging. After the used battery has been carried and the insertion/withdrawal locations of an electrical connector and an water connector are accurately positioned on the storage location, it may be prepared for being connected to a battery connector for charging. It can be understood that since step I is independent of steps E-H, it may be performed at the same time therewith.

In an optional embodiment, the method may further comprise step J, wherein the charging of the fresh battery is stopped at the storage location where the fresh battery is stored and the connection with the fresh battery is disconnected, and the end of step J needs to be earlier than the start of step F. It can be understood that since step J is independent of steps A-E, it may be performed at the same time therewith. After disconnecting from the battery connector, the fresh battery may be transported to the elevator. It can be understood that the conveying function may be completed by an electric motor driving a conveyor belt or a roller.

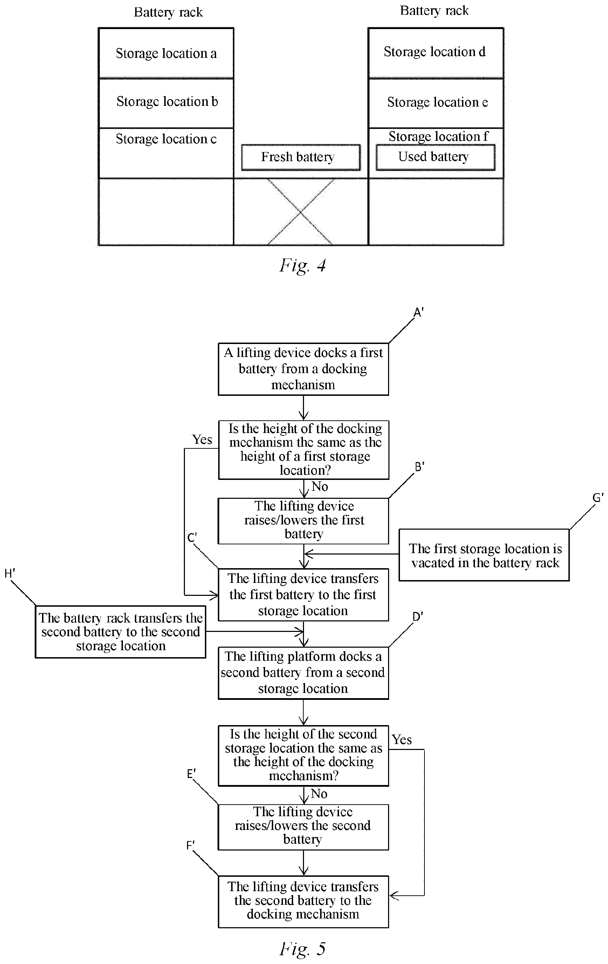

Figs. 3 and 4 are schematic block diagrams of simplified beats of a turnover process of the fresh and used batteries by the battery storage according to an embodiment of the invention, wherein Fig. 3 is before the swap, and Fig. 4 is after the swap. Figs. 3 and 4 show different storage location a, storage location b, storage location c, storage location d, storage location e, and storage location f. This combined method of simplified beats may increase the turnover speed and turnover efficiency of the battery. As the battery transfer time is shortened, the overall battery swap time is also shortened, and the operating efficiency and service capacity of the battery swap station have been improved.

As shown in the figure, in order to increase the battery turnover rate, the storage location f on one side of the docking height of the lifting platform may be vacated for storing the used battery, and the storage location c on the other side is dedicated to pre-storing the fresh battery, the fresh battery is transferred to the storage location on the other side before turnover. In this way, step C, step E, and step G in Fig. 2 may be omitted, and step D and step F in Fig. 2 can be implemented in one beat, which may greatly reduce turnover time.

The embodiment of this aspect considers a highly reliable and highly efficient way of quick battery swap and energy replenishment. In such a battery swap beat, in order to increase the battery turnover rate, the docking height of the lifting platform in the elevator is consistent with the transportation height of the storage locations on both sides, so that the elevator transports the used battery to a storage location on one side while, on the other side, the fresh battery is quickly transported to the elevator along the X direction, which can greatly reduce the turnover time, thus using the storage locations on both sides of the same height as a working point for battery swapping may effectively save the battery ascending/descending beats. After the fresh battery is docked with the external docking mechanism or while it is docked, the battery storage may optimize the allocation of the used battery to the corresponding storage location for charging through control.

In combination with the above, an aspect of this application provides a battery storage and transfer method using the battery storage of any embodiment of the invention, the method comprising a turnover process with simplified beats, as shown in Fig. 5. The method comprises the following steps A'-G', and may also comprise step H' and/or step I', which will be further described below.

In step A', the elevator docks a first battery from the docking mechanism, such as the used battery (that is, a battery that has exhausted its power, which will be described later using the used battery as an example), and then, when the height of the docking mechanism is different from the height of a first storage location for storing the used battery on the battery rack, it proceeds to step B', and when they are at the same height, it proceeds directly to step C'.

It can be understood that the used battery of a new energy vehicle may be removed by an independent disassembly tool (for example, the disassembly tool may be arranged on the RGV), and then the RGV will move the used battery to a docked position with the battery storage, at the same time, the lifting platform of the elevator ascends/descends to its docked position, and then the battery is moved laterally and docked to the battery transfer device of the lifting platform. It can be understood that the docking mechanism here may also be other types of docking facilities other than RGV.

In step B', the lifting platform raises/lowers the used battery to the first storage location, and then it proceeds to C'. As for the battery storage 10 in Fig. 1, after the elevator 20 docks the used battery, the lifting platform drives the used battery to ascend/descend to the first storage location along the Z direction, that is, in the vertical direction. As shown in Fig. 3, the elevator 20 transports the used battery to the first storage location of the battery rack, that is, the storage location f in the example of Fig. 3.

In step C', the lifting platform and the battery rack transfer the used battery to the first storage location, and then it proceeds to step D'. At this time, the used battery is transferred from the elevator to the battery rack, but it has not yet reached the storage location for storing the battery.

In step D', the lifting platform docks a second battery at a second storage location with the same height as the first storage location from the battery rack, and may position the second battery, then, when the height of the second storage location is different from the height of the docking mechanism, it proceeds to step E', and when the height of the second storage location is the same as the height of the docking mechanism, it proceeds directly to step F'. The second battery may be a fresh battery, that is, a battery that has complete recharging. The fresh battery is used as an example to describe.

In step E', the lifting platform raises/lowers the fresh battery to a height suitable for docking with the docking mechanism. It can be understood that steps B' and E' in the method may be omitted when the docking height of the lifting platform with the docking mechanism is the same as the heights of the first storage location and the second storage location.

In step F', the battery transfer device transfers the fresh battery to the docking mechanism.

It should be noted here that the method further comprises step G' in which the first storage location is vacated in the battery rack, and step H' in which the fresh battery is transferred to the second storage location. At this time, it is necessary that the end of step F' is earlier than the start of step C', that is, the first storage location is vacated before the battery rack docks the used battery, and the end of step H' is earlier than the start of step D', that is, the fresh battery is transferred to the second storage location before the elevator docks the fresh battery.

In an optional embodiment, the method may further comprise step I', wherein the charging of the fresh battery is stopped at the second storage location and the connection with the fresh battery is disconnected, and the end of step I' is earlier than the start of step D' and the start of step I' is later than the end of step H'. It can be understood that the fresh battery may only be charged after it is transferred to the second storage location and before it is docked by the elevator.

In an optional embodiment, the method may further comprise step J', in which the battery rack transports the used battery into the first storage location and positions it, and then the used battery is connected at the first storage location and the used battery is charged, and the start of step J' is later than the end of step C'. It can be understood that the used battery may only be charged after the used battery is docked by the battery rack and moved into the storage location.

In the foregoing method, since the first storage location for receiving the used battery and the second storage location for supplying the fresh battery are located at the same height level, step C' and step D' may be completed in one continuous action, which facilitates improving the efficiency of battery swapping.

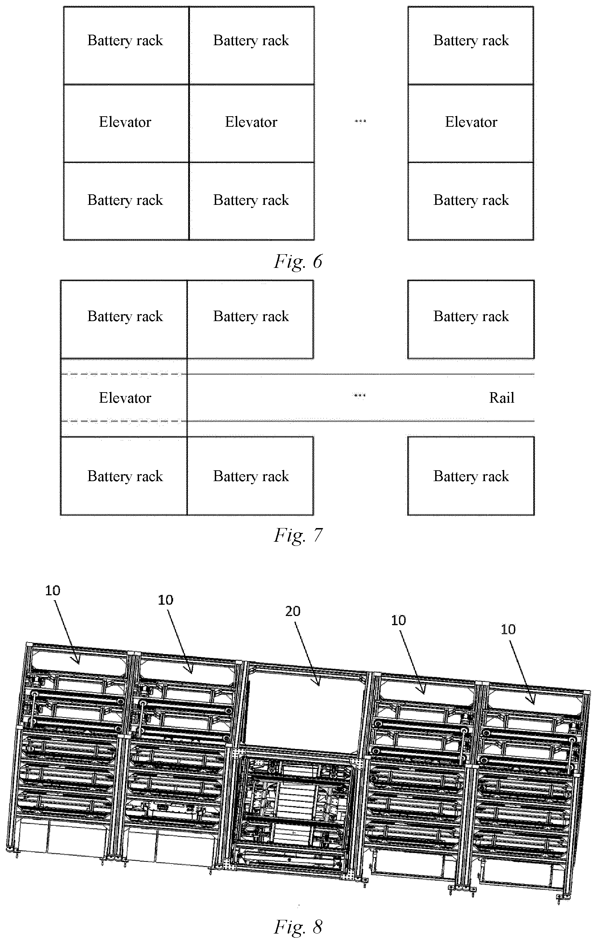

In a battery swap station, the battery storage is usually used alone. However, the battery storage designed in the invention may also be advantageously expanded in the Y horizontal direction. Figs. 6 and 7 are a schematic block diagram of an expanded distribution of elevators and battery racks in a battery storage according to an embodiment of the invention, or a schematic block diagram of an expanded distribution of battery storages in a battery swap station for a new energy vehicle according to an embodiment of the invention.

In an embodiment of the invention, as shown in Fig. 6, the elevator and the battery rack are simultaneously expanded in the Y direction by any number. In another optional embodiment, considering that a rail may be provided for the elevator to move between various expanded modules in the Y direction, there is no need to expand the elevator accordingly when performing such an expansion, and it is not necessary to configure one elevator for each expanded battery rack, therefore, Fig. 7 shows another extension of the elevator and the battery rack, in which only one elevator is used, which may reciprocate between various battery racks along the rail.

As can be seen from the above, an aspect of the invention proposes a compact and expandable battery storage, which comprises the elevator and the battery rack. The battery storage may be freely expanded along the Y direction to meet the needs of different sites. Undoubtedly, the battery rack itself may also be expanded in the Z direction, stacking more layers of storage locations. The number of storage locations on the battery rack is mainly determined by an overall height of the battery swap station, the height of the battery rack and the travel of the elevator. For example, three storage locations may be provided in an optional embodiment.

Figs. 8 and 9 schematically show different expansion manners of an elevator and battery racks in a battery storage according to an embodiment of the invention, respectively. It can be seen that in the embodiment of this optional aspect, the battery rack may not only stack more layers of storage locations in the height direction for Z-direction expansion, but also may be expanded in both X and Y directions. As shown in Fig. 8, the battery racks 10 may be stacked in the X direction, and the battery racks 10 are respectively arranged on both sides of the elevator 20 along the X direction. As shown in Fig. 9, the battery racks 10 and the elevators 20 expanded along the Y direction are similar to the example in Fig. 6, and the battery racks 10 and the elevators 20 are expanded along the Y direction at the same time. The battery storage may be expanded to better serve the battery swap station.

One aspect of the invention also provides a battery swap station for a new energy vehicle, in which a battery storage as in any of the foregoing embodiments may be provided. The battery storage in the battery swap station for a new energy vehicle may have a plurality of battery racks arranged in series. It can be understood that these battery racks arranged in series actually constitute a Y-direction expansion of the battery racks, wherein each battery rack may be provided with one elevator correspondingly, or all battery racks may share one elevator.

Fig. 10 shows an overall schematic view of a battery swap station for a new energy vehicle according to an embodiment of the invention. As shown in the figure, in this example, the entire battery swap station mainly comprises a battery rack 10, an RGV 40, a parking platform 50, a control cabinet 60, and a charging power cabinet 70, etc. When a new energy vehicle (not shown) that needs a battery swap enters the parking platform 50, X and Y directions of the vehicle are positioned through a V-shaped groove 51 and a Y-direction centering structure 52 on the platform, the vehicle is hoisted to a certain height by a hoisting mechanism 53 on the parking platform 50, and the RGV 40 enters a vehicle chassis through a rail for battery swapping, and transports the removed battery from the rail to a middle position between the battery storage and the parking platform and docks the battery with the elevator 20 of the battery storage; after the used battery enters the battery storage, a fresh battery is docked on the RGV through the elevator by the battery storage, then the fresh battery is assembled by the RGV through a chassis battery swap mode, and the RGV moves to a zero position through the rail; and the parking platform uses the hoisting mechanism to lower the vehicle such that the tire contacts the platform and moves to the zero position until the vehicle is driven out to complete one battery swap.

It can be seen that this battery swap station for a new energy vehicle has characteristics of well meeting the shortage of urban land, and that the occupied area directly affects the construction and operating cost of the battery swap station, and it has the advantages of being compact and occupying a small area. In addition, in terms of the case that the specification of the battery swap station can be flexibly configured to accommodate different sizes of land and different rated electric capacities, the battery storage of the corresponding aspect of the invention has the advantage of being expandable. At the same time, the corresponding aspect of the invention also improves the overall battery swap time by improving the efficiency of the battery storage for transferring the battery, which facilitates improving the operation efficiency and service capacity of the battery swap station.

The technical scope of the invention is not merely limited to the above description. Those skilled in the art can make various changes and modifications to the above embodiments without departing from the technical idea of the invention, and these changes and modifications shall fall within the scope of the invention.

## Claims

1. A battery storage, **characterized by** comprising:
a battery rack, a plurality of storage locations for storing batteries being provided in the battery rack; and
an elevator, the elevator being arranged adjacent to the battery rack, and the elevator having a lifting platform capable of ascending/descending to a height of each of the storage locations, wherein a battery transfer device is provided on the lifting platform, and the battery transfer device is adapted to dock and transfer a battery between the battery rack and a docking mechanism.

2. The battery storage according to claim 1, **characterized in that** the storage locations are located at different heights of the battery rack in a stacked manner.

3. The battery storage according to claim 1, **characterized in that** the battery rack uses a modular design to constitute a battery rack module, the elevator uses a modular design to constitute an elevator module, and the battery rack module is adjacent to the elevator module.

4. The battery storage according to claim 1, **characterized in that** the battery transfer device comprises a battery lateral moving device and a battery transverse moving device.

5. The battery storage according to claim 1, **characterized in that** a battery charging device is provided at each of the storage locations.

6. The battery storage according to claim 5, **characterized in that** a smart pluggable mechanism is provided at each of the storage locations for automatically connecting and disconnecting the battery with/from the battery charging device.

7. The battery storage according to claim 6, **characterized in that** the smart pluggable mechanism is controlled by a servo motor or a cylinder.

8. The battery storage according to claim 1, **characterized in that** a battery limiting device for fixing the battery is provided at each of the storage locations.

9. The battery storage according to claim 1, **characterized in that** a battery conveying device is provided at each of the storage locations for docking and transferring the battery between the lifting platform and the storage location.

10. The battery storage according to claim 9, **characterized in that** the battery conveying device is a conveyor belt.

11. The battery storage according to claim 1, **characterized in that** a battery cooling device is provided at each of the battery racks.

12. The battery storage according to any one of claims 1 to 11, **characterized in that** the battery racks are located on both sides of the elevator.

13. A battery swap station for a new energy vehicle, **characterized in that** the battery swap station for a new energy vehicle is provided with the battery storage according to any one of the preceding claims 1-12.

14. The battery swap station for a new energy vehicle according to claim 13, **characterized in that** the battery storage has a plurality of battery racks arranged in series.

15. The battery swap station for a new energy vehicle according to claim 13, **characterized in that** in the battery storage, each of the battery racks is correspondingly provided with one elevator, or all the battery racks share one elevator.

16. A battery storage and transfer method using the battery storage according to any one of claims 1 to 12, **characterized in that** the method comprises the following steps:
step A: the lifting platform docks a first battery from the docking mechanism, and then it proceeds to step B;
step B: the battery transfer device adjusts the position of the first battery on the lifting platform, and then it proceeds to step C or performs step C at the same time;
step C: the lifting platform raises or lowers the first battery to the height of the storage location for storing, and then it proceeds to step D;
step D: the lifting platform and the battery rack transfer the first battery to the storage location for storing, and then it proceeds to step E;
step E: the lifting platform is raised or lowered to the height of the storage location for storing a second battery, and then it proceeds to step F;
step F: the lifting platform docks the second battery from the battery rack, and then it proceeds to step G;
step G: the lifting platform raises or lowers the second battery to the height of the docking mechanism, and then it proceeds to step H; and
step H: the battery transfer device moves the second battery to the docking mechanism.

17. The method according to claim 16, **characterized in that** the method further comprises:
step I: the battery conveying device at the storage location for storing transports the first battery into the storage location for storing and positions it, and then the first battery is charged;
and the start of the step I is later than the end of the step D.

18. The method according to claim 16 or 17, **characterized in that** the method further comprises:
step J: the charging of the second battery is stopped at the storage location where the second battery is stored and the connection with the second battery is disconnected;
wherein the end of the step J is earlier than the start of the step F.

19. A battery storage and transfer method using the battery storage according to any one of claims 1 to 12, **characterized in that** the method comprises the following steps:
step A': the lifting platform docks a first battery from the docking mechanism, and then, when the height of the docking mechanism is different from the height of a first storage location for storing the first battery on the battery rack, it proceeds to step B', and when the height of the docking mechanism is the same as the height of the first storage location, it proceeds to step C';
step B': the lifting platform raises/lowers the first battery to the first storage location, and then it proceeds to C';
step C': the lifting platform and the battery rack transfer the first battery to the first storage location, and then it proceeds to step D';
step D': the lifting platform docks a second battery at a second storage location with the same height as the first storage location from the battery rack, then, when the height of the second storage location is different from the height of the docking mechanism, it proceeds to step E', and when the height of the second storage location is the same as the height of the docking mechanism, it proceeds to step F';
step E': the lifting platform raises/lowers the second battery to a height suitable for docking with the docking mechanism; and
step F': the battery transfer device transfers the second battery to the docking mechanism,
and the method further comprises:
step G': the first storage location is vacated in the battery rack;
step H': the battery rack transfers the second battery to the second storage location;
wherein the end of the step G' is earlier than the start of the step C', and the end of the step H' is earlier than the start of the step D'.

20. The method according to claim 19, **characterized in that** the method further comprises:
step I': the charging of the second battery is stopped at the second storage location and the connection with the second battery is disconnected;
wherein the end of the step I' is earlier than the start of the step D' and the start of the step I' is later than the end of the step H'.

21. The method according to claim 19 or 20, **characterized in that** the method further comprises:
step J': the battery rack transports the first battery into the first storage location and positions it, and then the first battery is connected at the first storage location and the first battery is charged,
wherein the start of the step J' is later than the end of the step C'.

22. The method according to claim 19, **characterized in that** the step C' and the step D' are completed in one continuous action.
